# FASCICULE DE BREVET EUROPEEN

(11) **EP 1 186 579 B1**
(45) Date de publication et mention de la délivrance du brevet: **15.03.2006**
(21) Numéro de dépôt: 01402318.8
(22) Date de dépôt: 07.09.2001
(51) Int. Cl.: C04B 35/622, C04B 35/624, C04B 35/111, C04B 35/486

(54) **Composition de rêvetement, procédé de fabrication de celle-ci et procédé de revêtement d'une surface d'un substrat**
Beschichtungszusammensetzung, Verfahren zu ihrer Herstellung und Verfahren zum Beschichten einer Substratoberfläche
Coating composition, method of making the same and method for coating a substrate surface

(30) Priorité: 07.09.2000 FR 0011403
(43) Date de publication de la demande: 13.03.2002
(73) Titulaire: ASSOCIATION POUR LA RECHERCHE ET LE DEVELOPPEMENT DES METHODES ET PROCESSUS INDUSTRIELS (ARMINES), F-75272 Paris Cédex 06 (FR)
(72) Inventeur: Billi, Eléna, 10090 San Giusto Canavese (Torino) (IT); Montanaro, Laura, 10121 Torino (IT); Negro, Alfredo, 10100 Torino (IT); Pijolat, Christophe, 42290 Sorbiers (FR); Viricelle, Jean-Paul, 42160 Andrezieux Boutheon (FR); Lalauze, René, 42100 Saint-Etienne (FR)
(74) Mandataire: Lavialle, Bruno François Stéphane

(56) Documents cités:
- WO-A-96/29447
- BARROW D: "SOL-GEL METHOD YIELDS THICKER CERAMIC COATINGS" ADVANCED MATERIALS & PROCESSES, AMERICA SOCIETY FOR METALS. METALS PARK, OHIO, US, vol. 153, no. 4, 1 avril 1998 (1998-04-01), page 35 XP000754796 ISSN: 0882-7958
- BARROW D A ET AL: "CHARACTERIZATION OF THICK LEAD ZIRCONATE TITANATE FILMS FABRICATED USING A NEW SOL GEL BASED PROCESS" JOURNAL OF APPLIED PHYSICS,US,AMERICAN INSTITUTE OF PHYSICS. NEW YORK, vol. 81, no. 2, 15 janvier 1997 (1997-01-15), pages 876-881, XP000659453 ISSN: 0021-8979
- PATENT ABSTRACTS OF JAPAN vol. 013, no. 262 (C-608), 16 juin 1989 (1989-06-16) & JP 01 065270 A (MATSUSHITA ELECTRIC IND CO LTD), 10 mars 1989 (1989-03-10)
- KWON S ET AL: "DRY PRESSING BOEHMITE GELS FOR THE FABRICATION OF MONOLITHIC ALPHA-AL2O3" JOURNAL OF SOL-GEL SCIENCE AND TECHNOLOGY,NL,KLUWER ACADEMIC PUBLISHERS, DORDRECHT, vol. 9, no. 1, 1997, pages 53-64, XP000683826 ISSN: 0928-0707

## Description

La présente invention concerne une composition de revêtement, un procédé de fabrication de celle-ci et un procédé de revêtement mettant en oeuvre une telle composition.

Dans l'industrie, il est d'usage courant de revêtir des pièces d'une couche d'un matériau fonctionnel pour profiter de propriétés de ce dernier que le matériau constituant la pièce lui-même ne présente pas. Parmi les propriétés recherchées, on peut citer les propriétés électriques (matériau isolant ou conducteur), magnétiques, mécaniques (comme la dureté), chimiques ou thermiques (matériau réfractaire). Les céramiques, et en particulier les oxydes métalliques tels que l'alumine ou la zircone, sont couramment utilisées de cette manière.

Un des procédés utilisés pour la mise en oeuvre de ces céramiques consiste à déposer par sérigraphie sur une surface d'un substrat une couche d'une composition incorporant un élément actif, comme un oxyde métallique, qui possède la ou les propriétés recherchées et se présente sous forme d'une poudre dispersée dans une solution thixotropique. La solution thixotropique se compose d'un liant qui assurera l'accrochage des particules de l'élément actif entre elles et l'accrochage de ces particules au substrat, d'un additif dispersant qui favorise une dispersion homogène de la poudre d'élément actif dans le liant, et d'un additif rhéologique qui confère à la solution son comportement thixotropique. Lors du dépôt par sérigraphie, un couteau ou une racle force la composition à passer dans les ouvertures d'un masque. Du fait de son caractère thixotropique, la composition se fluidifie sous la contrainte exercée par le couteau, ce qui facilite son passage dans les ouvertures de l'écran, et redevient visqueuse une fois au repos dans les ouvertures, ce qui permet d'éviter les bavures.

La résistance mécanique de la couche et l'adhésion de celle-ci au substrat sont obtenues lors d'une étape ultérieure de traitement thermique.

Dans une telle composition, les composants ajoutés à l'élément actif doivent être compatibles chimiquement avec celui-ci de telle manière qu'ils ne provoquent pas de modification des propriétés ni de modification de phase de celui-ci. L'élaboration de la composition est de ce fait délicate et passe principalement par des procédés empiriques qui s'appuient sur de nombreux essais visant à vérifier cette compatibilité et qui mettent en oeuvre un savoir-faire important.

Par ailleurs, les constituants de la couche autres que l'élément actif constituent des impuretés (sous ce terme général, on entendra des inclusions et/ou des impuretés chimiques) qui risquent de dégrader la propriété recherchée. Afin de limiter la quantité d'impuretés dans la couche, il est possible d'utiliser des composants organiques qui s'évaporent lors du traitement thermique. Les additifs dispersant et rhéologique utilisés sont ainsi généralement organiques. En revanche, il n'est pas possible d'utiliser un composé organique pour le liant qui a pour fonction d'assurer la cohésion mécanique de la couche et doit de ce fait demeurer au moins partiellement dans celle-ci après le traitement thermique. Le liant constitue ainsi généralement une impureté vis-à-vis de la propriété recherchée.

Concernant les additifs organiques, en s'évaporant ceux-ci vont créer des pores dans la couche. Or, la volatilité de ces additifs est difficile à contrôler de sorte que l'obtention d'une porosité précise est délicate. En outre, dans le cas où la porosité obtenue est trop importante, il existe un risque de fissuration de la couche.

Par l'invention, on entend fournir un moyen permettant l'obtention d'une couche d'au moins un oxyde métallique présentant de relativement faibles teneurs en impuretés.

Ainsi, on prévoit, selon l'invention, une composition de revêtement comportant un élément actif à base d'au moins un oxyde d'un métal et sous forme d'une poudre dispersée dans un gel thixotropique à base d'eau et d'au moins un hydroxyde dudit métal.

Compte tenu de sa composition, le gel est compatible avec l'élément actif et possède des propriétés réactives qui favorisent l'accrochage des particules d'élément actif entre elles et au substrat. Après dépôt de la composition de revêtement sur un substrat et lors d'un traitement thermique ultérieur, le gel se transforme en oxyde métallique qui va former des ponts entre les particules d'oxyde métallique issues de la poudre et en eau qui va s'évaporer. Le gel peut ainsi assurer une fonction de liant, de dispersant et d'additif rhéologique. La composition de revêtement incorpore donc principalement d'une part l'élément actif, en poudre et sous forme hydroxyde, qui présente la propriété recherchée et qui va demeurer dans la couche après le traitement thermique suivant le dépôt et d'autre part de l'eau qui va s'évaporer lors du traitement thermique. Il est de la sorte possible d'obtenir une couche homogène avec de faibles teneurs en impuretés.

Selon une caractéristique particulière, la composition présente un rapport massique poudre/gel compris sensiblement entre 1 et 4.

Ceci permet de former une couche stable présentant un retrait limité lors du traitement thermique.

Selon des modes de réalisation particuliers, l'élément actif est l'alumine ou la zircone yttriée.

La présente invention a également pour objet un procédé de revêtement d'une surface d'un substrat par un élément actif, comprenant les étapes de :
- déposer sur la surface du substrat au moins une couche d'une composition du type précité,
- chauffer la composition déposée au moins jusqu'à ce que le gel se transforme au moins partiellement en oxyde dudit métal.

Après traitement thermique, les hydroxydes sont dégradés et la partie aqueuse du gel s'évapore pour ne plus laisser que l'oxyde métallique issu de la dégradation de l'hydroxyde. Cet oxyde métallique issu de la dégradation de l'hydroxyde va former des "ponts" reliant entre elles et au substrat les particules de la poudre d'oxyde métallique.

De préférence, le dépôt est réalisé par sérigraphie.

La présente composition est particulièrement bien adaptée à ce mode de dépôt.

Avantageusement, la couche déposée présente une porosité prédéterminée, ladite porosité étant obtenue par un choix d'au moins un des paramètres suivants :
- le rapport massique poudre/gel,
- la granulométrie de la poudre,
- la teneur en poids d'oxyde dans le gel chauffé,
- la teneur en poids d'eau résiduelle dans le gel chauffé,
- le temps de chauffage,
- la température de chauffage.

La modification d'un ou plusieurs de ces paramètres permet d'obtenir de façon relativement précise une porosité déterminée.

La présente invention a également pour objet un procédé de fabrication d'une composition du type précité, comprenant les étapes de :
- introduire des ions d'un métal (par exemple sous forme de sels) dans une solution aqueuse pour former des hydroxydes dudit métal,
- modifier le pH de la solution jusqu'à dépasser la solubilité des hydroxydes dudit métal dans la solution,
- précipiter la solution pour obtenir un gel,
- mélanger au gel une poudre d'un oxyde dudit métal.

D'autres caractéristiques et avantages de l'invention ressortiront à la lecture de la description qui suit de modes de mise en oeuvre particuliers non limitatifs de l'invention.

Un premier mode de mise en oeuvre de l'invention permet de déposer sur un substrat une couche d'un élément actif composé d'alumine α (l'alumine a pour formule Al₂O₃) .

La composition comprend une poudre de l'élément actif, à savoir ici l'alumine α, dispersée dans un gel thixotropique.

La poudre d'alumine α utilisée a une granulométrie inférieure à 10 micromètres.

Le gel thixotropique est réalisé à partir d'une solution aqueuse dans laquelle on introduit des sels d'ions aluminium (ici du chlorure d'aluminium) qui vont former des hydroxydes d'aluminium, et le pH de la solution est ensuite modifié, par exemple par ajout d'ammoniaque, jusqu'à dépasser la solubilité de ces hydroxydes d'aluminium dans la solution. On obtient alors par précipitation un gel qui comprend l'élément actif sous forme d'hydroxyde et a pour formulation Alₘ(OH)ₙ+ H₂O. Dans cet exemple particulier, le gel comprend 10% en poids d'alumine α, c'est-à-dire que 100 grammes de gel donnent 10 grammes d'alumine α après calcination à 1200°C. Pour faciliter l'obtention du gel, il est possible d'intervenir notamment sur la température, la vitesse d'ajout de l'ammoniaque, l'agitation de la solution...

La poudre d'alumine α est ensuite mélangée au gel pour obtenir une composition ayant un rapport massique poudre / gel compris ici entre 2 et 4.

La composition est ensuite déposée par sérigraphie sur une surface du substrat pour former une couche épaisse de quelques micromètres à quelques dizaines de micromètres.

La couche déposée est soumise à un traitement thermique durant lequel elle est portée à une température de 1200°C pendant une durée comprise entre 0,5 heure et quelques heures. Lors de ce traitement thermique, l'eau et une éventuelle partie organique du gel s'évaporent et la partie restante du gel est constituée essentiellement d'alumine α issue de la dégradation des hydroxydes. Cette alumine α va entourer les particules de poudre d'alumine α et former des "ponts" reliant les particules de poudre d'alumine α entre elles et au substrat. Le chauffage permet ainsi d'obtenir une bonne tenue mécanique de la couche et une bonne adhésion de celle-ci au substrat.

L'évaporation de la partie organique du gel crée des pores dans la couche déposée. La porosité obtenue avec la composition ci-dessus décrite présente une distribution homogène de la taille des pores. La porosité de la couche peut être contrôlée en faisant varier au moins un des paramètres suivants :
- le rapport massique poudre / gel,
- la granulométrie de la poudre (la taille des pores augmente avec la granulométrie),
- la teneur en poids d'oxyde dans le gel,
- la teneur en poids d'eau résiduelle dans le gel chauffé,
- le temps de chauffage,
- la température de chauffage.

On notera que la poudre est incorporée au gel selon une quantité suffisante pour limiter le retrait du gel lors du traitement thermique (ce retrait modifie la géométrie de la couche et risque de provoquer des fissurations s'il est trop important) et pour donner de la consistance au gel afin d'obtenir une couche déposée stable.

En variante, il est possible lors du traitement thermique de déterminer les conditions et le cycle du chauffage de manière à obtenir des variétés allotropiques de l'élément actif différentes. Ainsi, dans l'exemple précité, en chauffant seulement à 700°C, le gel peut être transformé en alumine γ lors de l'étape de traitement thermique. L'alumine γ possède une surface spécifique plus importante et peut être intéressante dans certaines applications, notamment dans le domaine de la catalyse.

Par ailleurs, des revêtements multicouches peuvent être envisagés, les couches comportant alors des éléments actifs identiques ou analogues. Une couche comportant plusieurs éléments actifs est également réalisable.

Un deuxième mode de mise en oeuvre permet de recouvrir un substrat d'une couche d'un élément actif composé de zircone (ZrO₂) cubique yttriée.

La composition comprend une poudre de zircone yttriée dispersée dans un gel thixotropique.

La poudre de zircone yttriée a une granulométrie inférieure à 10 micromètres.

Le gel thixotropique est réalisé comme précédemment à partir d'une solution aqueuse dans laquelle on introduit des ions de zirconium et d'yttrium (zircone yttriée), et le pH de la solution est modifié pour dépasser la solubilité des hydroxydes formés par ceux-ci dans la solution. On obtient alors un gel qui comprend l'élément actif sous forme d'hydroxyde. Dans cet exemple particulier, le gel comprend 10% en poids de zircone yttriée, c'est-à-dire que 100 grammes de gel donnent 10 grammes de zircone yttriée après calcination à 1000°C.

La poudre de zircone yttriée est ensuite mélangée au gel pour obtenir une composition ayant un rapport massique poudre / gel compris ici entre 1,5 et 2,5.

La composition est ensuite déposée par sérigraphie sur une surface du substrat pour former une couche épaisse de quelques micromètres à quelques dizaines de micromètres.

La couche déposée est soumise à un traitement thermique durant lequel elle est portée à une température de 1000°C pendant une durée comprise entre 0,5 heure et quelques heures. Lors de ce traitement thermique, les hydroxydes se dégradent et la partie aqueuse du gel s'évapore et la partie restante du gel est constituée essentiellement de zircone yttriée issue de la dégradation des hydroxydes. Cette zircone yttriée va entourer les particules de poudre de zircone yttriée et former des "ponts" reliant les particules de poudre de zircone yttriée entre elles et au substrat.

La couche ainsi préparée, relativement dense, présente une porosité faible.

Bien entendu, l'invention n'est pas limitée au mode de réalisation décrit et on peut y apporter des variantes de réalisation sans sortir du cadre de l'invention tel que défini par les revendications.

En particulier, d'autres modes de dépôt de la composition de revêtement sont envisageables, comme le simple recouvrement, total ou partiel, de la surface du substrat.

Par ailleurs, la composition de revêtement peut comporter plusieurs éléments actifs et/ou éventuellement des composants organiques tels que des adjuvants.

## Revendications

1. Composition de revêtement, **caractérisée en ce qu'**elle comprend un élément actif à base d'au moins un oxyde d'un métal et sous forme d'une poudre dispersée dans un gel thixotropique à base d'eau et d'au moins un hydroxyde dudit métal.

2. Composition selon la revendication 1, **caractérisée en ce qu'**elle présente un rapport massique poudre/gel compris sensiblement entre 1 et 4.

3. Composition selon la revendication 1 ou la revendication 2, **caractérisée en ce que** l'élément actif est l'alumine.

4. Composition selon la revendication 1 ou la revendication 2, **caractérisée en ce que** l'élément actif est la zircone yttriée.

5. Procédé de revêtement d'une surface d'un substrat par un élément actif, **caractérisé en ce qu'**il comprend les étapes de :
- déposer sur la surface du substrat au moins une couche d'une composition selon l'une quelconque des revendications précédentes,
- chauffer la composition déposée au moins jusqu'à ce que le gel se transforme au moins partiellement en oxyde dudit métal.

6. Procédé selon la revendication 5, **caractérisé en ce que** le dépôt de la composition est réalisé par sérigraphie.

7. Procédé selon la revendication 5 ou la revendication 6, **caractérisé en ce que** la ou chaque couche déposée présente une porosité prédéterminée, ladite porosité étant obtenue par un choix d'au moins un des paramètres suivants :
- le rapport massique poudre/gel,
- la granulométrie de la poudre,
- la teneur en poids d'oxyde dans le gel,
- la teneur en poids d'eau résiduelle dans le gel chauffé,
- le temps de chauffage,
- la température de chauffage.

8. Procédé selon l'une quelconque des revendications 5 à 7, **caractérisé en ce que**, l'élément actif étant l'alumine α, la composition est chauffée à une température de l'ordre de 1200°C pendant un temps de l'ordre de 0,5 heure à quelques heures.

9. Procédé selon l'une quelconque des revendications 5 à 7, **caractérisé en ce que**, la composition comportant de l'aluminium, la composition déposée est chauffée à une température de 700°C pendant un temps de l'ordre de 0,5 heure à quelques heures de manière à obtenir de l'alumine γ.

10. Procédé selon l'une quelconque des revendications 5 à 7, **caractérisé en ce que**, l'élément actif étant la zircone yttriée, la composition est chauffée à une température de l'ordre de 1000°C pendant un temps de l'ordre de 0,5 heure à quelques heures.

11. Procédé de fabrication d'une composition selon l'une quelconque des revendications 1 à 4, **caractérisé en ce qu'**il comprend les étapes de :
- introduire des ions d'un métal dans une solution aqueuse pour former des hydroxydes dudit métal,
- modifier le pH de la solution jusqu'à dépasser la solubilité des hydroxydes dudit métal dans la solution,
- précipiter la solution pour obtenir un gel,
- mélanger au gel une poudre d'un oxyde dudit métal.

## Claims

1. A coating composition, **characterized in that** it comprises an active element based on at least one metal oxide and in the form of a powder dispersed in a thixotropic gel based on water and at least one hydroxide of said metal.

2. A composition according to claim 1, **characterized in that** it presents a powder-to-gel weight ratio lying substantially in the range 1 to 4.

3. A composition according to claim 1 or claim 2, **characterized in that** the active element is alumina.

4. A composition according to claim 1 or claim 2, **characterized in that** the active element is yttrified zirconia.

5. A method of coating a surface of a substrate in an active element, the method being **characterized in that** it comprises the steps of:
depositing at least one layer of a composition according to any preceding claim on the surface of the substrate;
heating the deposited composition at least until the gel transforms at least in part into an oxide of said metal.

6. A method according to claim 5, **characterized in that** the composition is deposited by silk-screen printing.

7. A method according to claim 5 or claim 6, **characterized in that** the or each deposited layer presents a predetermined pore size, which pore size can be obtained by acting on at least one of the following parameters:
· the powder-to-gel weight ratio;
· the grain size of the powder;
· the oxide content by weight in the gel;
· the residual water content by weight in the heated gel;
· the heating time; and
· the heating temperature.

8. A method according to any one of claims 5 to 7, **characterized in that** the active element is α alumina, and the composition is heated to a temperature of about 1200°C for a time of about 0.5 hours to a few hours.

9. A method according to any one of claims 5 to 7, **characterized in that** the composition includes aluminum, and the deposited composition is heated to a temperature of 700°C for a length of time of about 0.5 hours to a few hours so as to obtain γ alumina.

10. A method according to any one of claims 5 to 7, **characterized in that** the active element is yttrified zirconia, and the composition is heated to a temperature of about 1000°C for a length of time of about 0.5 hours to a few hours.

11. A method of fabricating a composition according to any one of claims 1 to 4, the method being **characterized in that** it comprises the steps consisting in:
· introducing ions of a metal in an aqueous solution to form hydroxides of said metal;
· modifying the pH of the solution until the solubility of the hydroxides of said metal in the solution is exceeded;
· precipitating the solution to obtain a gel; and
· mixing an oxide of said metal in powder form with the gel.

## Patentansprüche

1. Beschichtungszusammensetzung, **dadurch gekennzeichnet, dass** diese ein aktives Element auf der Basis zumindest eines Metalloxids und in Form eines Pulvers umfasst, das in einem thixotropen Gel auf der Basis von Wasser und zumindest einem Hydroxid des Metalls gelöst ist.

2. Zusammensetzung nach Anspruch 1, **dadurch gekennzeichnet, dass** ihr Masseverhältnis von Pulver/Gel im wesentlichen zwischen 1 und 4 liegt.

3. Zusammensetzung nach Anspruch 1 oder 2, **dadurch gekennzeichnet, dass** das aktive Element Aluminiumoxid ist.

4. Zusammensetzung nach Anspruch 1 oder 2, **dadurch gekennzeichnet, dass** das aktive Element Yttrium-Zirkoniumdioxid ist.

5. Verfahren zum Beschichten einer Oberfläche eines Substrats mit einem aktiven Element, **dadurch gekennzeichnet, dass** es die folgenden Schritte umfasst:
- Auftragen zumindest einer Schicht einer Zusammensetzung nach einem der vorhergehenden Ansprüche auf der Oberfläche des Substrats,
- Erhitzen der aufgetragenen Zusammensetzung zumindest soweit bis das Gel zumindest teilweise in ein Oxid des Metalls übergegangen ist.

6. Verfahren nach Anspruch 5, **dadurch gekennzeichnet, dass** das Auftragen der Zusammensetzung durch Siebdruck erfolgt.

7. Verfahren nach Anspruch 5 oder 6, **dadurch gekennzeichnet, dass** die oder jede aufgetragene Schicht eine vorbestimmte Porosität aufweist, wobei die Porosität durch Auswahl zumindest eines der folgenden Parameter erzielt ist:
- das Pulver/Gel-Masseverhältnis
- die Granulometrie des Pulvers,
- Gewichtsanteil des Oxids in dem Gel,
- Gewichtsanteil des in dem erhitzten Gel verbleibenden Wassers,
- Erhitzungsdauer,
- Erhitzungstemperatur.

8. Verfahren nach einem der Ansprüche 5 bis 7, **dadurch gekennzeichnet, dass**, wenn das aktive Element das Aluminiumoxid α ist, die Zusammensetzung während eines Zeitraums von 0,5 Stunden bis mehreren Stunden auf eine Temperatur in der Größenordnung von 1200°C erhitzt wird.

9. Verfahren nach einem der Ansprüche 5 bis 7, **dadurch gekennzeichnet, dass**, wenn die die Zusammensetzung Aluminium enthält, diese während eines Zeitraums von 0,5 Stunden bis mehreren Stunden auf eine Temperatur von 700°C erhitzt wird, um das Aluminiumoxid γ zu erhalten.

10. Verfahren nach einem der Ansprüche 5 bis 7, **dadurch gekennzeichnet, dass**, wenn das aktive Element Yttrium-Zirkoniumdioxid ist, die Zusammensetzung während eines Zeitraums von 0,5, Stunden bis mehreren Stunden auf eine Temperatur in der Größenordnung von 1000°C erhitzt wird.

11. Verfahren zur Herstellung einer Zusammensetzung nach einem der Ansprüche 1 bis 4, **dadurch gekennzeichnet, dass** es die folgenden Schritte umfasst:
- Zugabe von Metallionen in eine wässrige Lösung, um Hydroxide des Metalls zu bilden,
- Modifizieren des pH-Werts der Lösung soweit bis die Löslichkeit der Hydroxide des Metalls in der Lösung überschritten ist,
- Abscheiden der Lösung, um ein Gel zu erhalten,
- Mischen eines Pulvers eines Oxids des genannten Metalls in das Gel.
